(19) Europäisches Patentamt

European Patent Office

Office européen des brevets

(11) **EP 2 221 588 B1**

(12) # EUROPEAN PATENT SPECIFICATION

(45) Date of publication and mention
of the grant of the patent:
**14.01.2015 Bulletin 2015/03**

(51) Int Cl.:
***G01D 5/245*** (2006.01)    ***G01D 1/00*** (2006.01)
***G01D 5/20*** (2006.01)    ***G01D 15/00*** (2006.01)
***G01D 21/00*** (2006.01)

(21) Application number: **08852148.9**

(22) Date of filing: **10.11.2008**

(86) International application number:
**PCT/JP2008/070408**

(87) International publication number:
**WO 2009/066574 (28.05.2009 Gazette 2009/22)**

(54) **ROTATION ANGLE DETECTING SENSOR**

SENSOR FÜR ROTATIONSWINKELMESSUNG

CAPTEUR D'ANGLE DE ROTATION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.11.2007 JP 2007300927**

(43) Date of publication of application:
**25.08.2010 Bulletin 2010/34**

(73) Proprietor: **Sumida Corporation
Tokyo 103-8589 (JP)**

(72) Inventors:
• **YAMAGATA, Tetsuo
Tokyo 103-8259 (JP)**

• **NAGASAWA, Hiroaki
Tokyo 103-8259 (JP)**

(74) Representative: **Price, Paul Anthony King
D Young & Co LLP
120 Holborn
London EC1N 2DY (GB)**

(56) References cited:
JP-A- 6 174 406     JP-A- 63 271 112
JP-A- 2002 162 252     JP-A- 2007 024 556
JP-A- 2007 024 556     JP-A- 2007 327 940
US-A1- 2001 005 133     US-A1- 2004 085 063
US-A1- 2005 184 726

EP 2 221 588 B1

**Description**

**Technical Field**

The present invention relates to a rotation angle detecting sensor for detecting the position of a rotating body such as a rotor of a motor.

**Background Art**

In a brushless DC motor, rectification control is performed by switching the direction of a current flowing in a stator. In order to perform such a rectification control, it is necessary to obtain angle information of the rotor, and therefore an angle sensor for detecting the angle of the rotor is provided (see, for example, Patent Document 1).

The angle sensor is generally based on a method for detecting the magnetic field of a permanent magnet of the rotor.

In contrast, in the case where finer control is necessary, a rotation angle detecting sensor based on eddy current loss principle, as disclosed in Patent Document 1, is used.

[Patent Document 1] German Utility Model 20 2006 008 962 U1

**Disclosure of the Invention**

In the art disclosed in Patent Document 1, an encoder structure configured by a conductor pattern is provided on a rotor, and a rotation angle sensor configured by inductance elements (coils or the like) is provided opposing the encoder structure.

Further, the width of the conductor pattern of the encoder structure changes periodically, so that when a signal current is applied to the inductance element, the loss caused in the inductance is intentionally changed due to the eddy current generated in the encoder structure, and thereby the angle information can be detected.

In the art disclosed in Patent Document 1, the rotation angle sensor is configured by a plurality of coils having the same shape arranged apart from each other by equal spaces along a circle with a rotating shaft of the rotor as the center.

Thus, when trying to reduce the diameter of the sensor or to increase the cycle number of the conductor pattern, the connection between adjacent coils will become dense.

Thus, due to the effect of the connection between adjacent coils, the magnetic field will change, and therefore error will be caused in the detection result, so that accuracy of the sensor will be degraded.

For this reason, there has been a restriction in reducing the diameter of the sensor and increasing the cycle number.

To solve the aforesaid problems, an object of the present invention is to provide a rotation angle detecting sensor capable of being miniaturized.

A rotation angle detecting sensor according to an aspect of the present invention includes: a rotating body; an encoder structure configured by a conductor pattern attached to the rotating body so as to be able to rotate with the rotating body, the encoder structure having n (n represents a positive integer) cycles of phases each ranging from phase 0° to phase 360°, each phase being formed by periodically changing the width of the conductor pattern; and a sensor body having a plurality of inductance elements and disposed opposing the encoder structure with a space, wherein the cycle number n of the phase of the encoder structure is a positive integer equal to or greater than three, wherein the plurality of inductance elements have a phase difference of 90 degrees therebetween, and wherein two adjacent inductance elements are disposed apart from each other by a space of at least half a phase of the encoder structure.

With the rotation angle detecting sensor according to the present invention, owing to the provision of the encoder structure having n cycles of phases each ranging from phase 0° to phase 360°, each phase being formed by periodically changing the width of the conductor pattern, and the sensor body having a plurality of inductance elements and disposed opposing the encoder structure with a space, the periodic change of the width of the conductor pattern of the encoder structure can be detected through the inductance elements of the sensor body. Thus, it is possible to detect the rotation angle of the rotating body based on the detection result.

Further, in the rotation angle detecting sensor according to the present invention, the plurality of inductance elements have a phase difference of 90 degrees therebetween, and the two adjacent inductance elements are disposed apart from each other by a space of at least half a phase of the encoder structure. With such a configuration, the distance between two adjacent inductance elements can be increased compared with a configuration in which the inductance elements are collectively disposed in one phase of the encoder structure with a space of 1/4 of a phase.

According to the present invention, since the distance between two adjacent inductance elements can be increased, the interaction between two adjacent inductance elements can be reduced, and therefore error caused in detection result can be restrained.

Thus, according to the present invention, accuracy of the sensor can be improved.

Further, according to the present invention, in the case where the diameter of the pattern portion of the encoder structure is reduced and/or where the number of cycle (phase) of the encoder structure is increased, sufficient distance can be ensured between adjacent inductance elements, and therefore high accuracy can be obtained.

Thus, it is possible to reduce the diameter of the pattern portion and therefore to reduce the size of the whole sensor.

**Brief Description of Drawings**

FIGS. 1A and 1B are views schematically showing the configuration of a motor having a sensor according to an embodiment of the present invention, wherein FIG. 1A is a view (a plan view) schematically showing a rotation angle detecting sensor according to the aforesaid embodiment of the present invention, and FIG. 1B is a side view seen from the direction indicated by arrow A of FIG. 1A.

FIG. 2 is a plan view showing a rotor of FIGS. 1A and 1B.

FIG. 3 is a plan view showing an encoder structure of FIG. 1A, FIG. 1B and FIG. 2.

FIGS. 4A and 4B are views schematically showing the configuration of primary portions (including a sensor body) of the sensor of FIGS. 1A and 1B.

FIG. 5 is a circuit diagram showing an example of the circuit configuration of a sensor system.

FIG. 6 is a view showing the entire arrangement of the configuration of FIG. 4A in the case where the diameter of a pattern portion is reduced.

FIG. 7 is a view showing the entire arrangement of the configuration of FIG. 4A in the case where cycle number is increased.

FIGS. 8A and 8B are views schematically showing the configuration of a rotation angle detecting sensor according to another embodiment of the present invention.

FIG. 9 is a view schematically showing the configuration of the sensor body according to a comparative example (i.e., an enlarged plan view of primary portions).

FIG. 10 is a view showing a state where coils of FIG. 9 and the conductor pattern face each other.

FIG. 11A is a view showing the entire arrangement of the coils and the conductor pattern of FIG. 10. FIG. 11B is a plan view of the sensor body of FIG. 11A.

FIG. 12 is a view showing the entire arrangement of the configuration of the comparative example in the case where the diameter of the pattern portion is reduced.

FIG. 13 is a view showing the entire arrangement of the configuration of the comparative example in the case where the cycle number is increased.

**Explanation of Reference Numerals**

| 1 | rotating shaft |
| 2 | rotor |
| 3 | encoder structure |
| 4 | sensor body |
| C1, C2, C3, C4 | coil |

**Best Modes for Carrying Out the Invention**

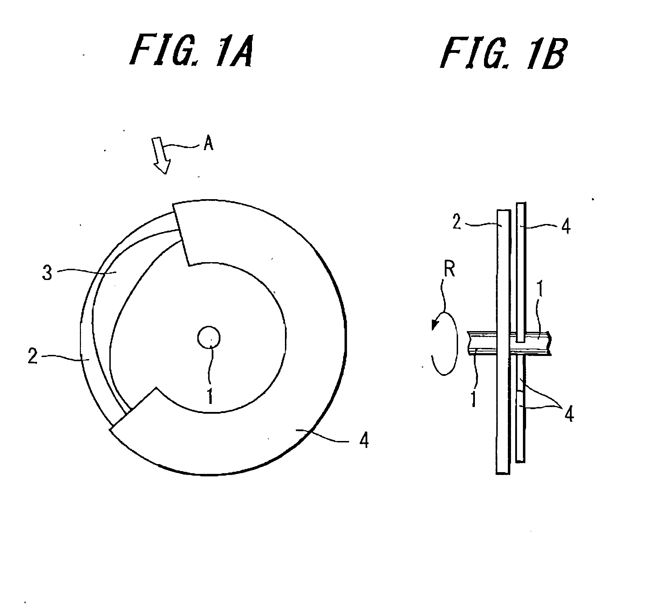

FIGS. 1A and 1B are views schematically showing the configuration of a rotation angle detecting sensor according to an embodiment of the present invention. FIG. 1A is a plan view, and FIG. 1B is a side view seen from the direction indicated by arrow A of FIG. 1A.

As shown in FIGS. 1A and 1B, a circular plate-like rotor 2 is attached to a bar-like rotating shaft 1.

The rotor 2 rotates around the rotating shaft 1 as shown by arrow R of FIG. 1B.

Further, an encoder structure 3 configured by a conductor pattern is formed on a surface of the rotor 2.

Further, a sensor body 4 of the rotation angle detecting sensor is provided opposing the surface of the rotor 2 on which the encoder structure 3 is formed.

The sensor body 4 is a C-shaped member extending along a circular arc with the rotating shaft 1 as the center.

Further, the sensor body 4 is fixed by a member not shown in the drawing, and the encoder structure 3 of the rotor 2 is configured so that the position thereof changes relative to the sensor body 4.

Further, the encoder structure 3 and the sensor body 4 configure a sensor for detecting the rotation angle of the rotor 2.

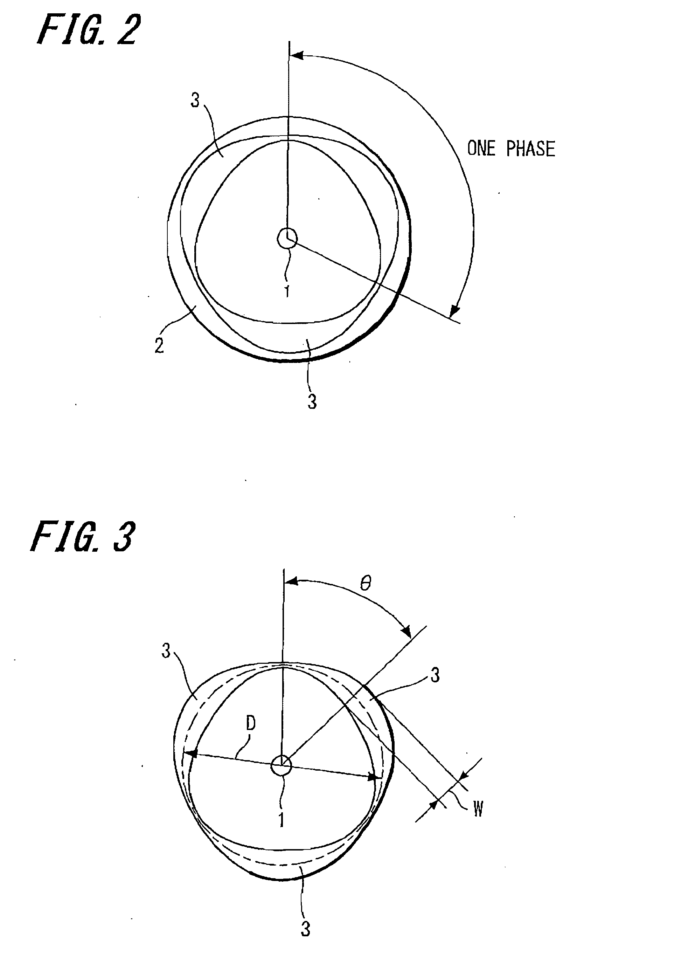

FIG. 2 is a plan view showing the rotor 2 of FIGS. 1A and 1B. Further, FIG. 3 is a plan view showing details of the conductor pattern of the encoder structure 3.

As shown in FIG. 2, the width of the conductor pattern of the encoder structure 3 changes according to a trigonometric function with respect to the rotation angle of the rotor 2. When the rotor 2 rotates, the width of the conductor pattern of the encoder structure 3 changes periodically at a specified position.

FIG. 2 also shows the range of one phase (one cycle) of the periodic change of the width of the conductor pattern. Since one cycle (360 degrees) is formed by three phases, one phase is equal to 120 degrees.

Further, as shown in FIG. 3, with a circle having a diameter D indicated by a dashed line as the center, the inner side and the outer side of the conductor pattern of the encoder structure 3 each change according to a trigonometric function. As a result, width W of the conductor pattern also changes according to a trigonometric function. Since the width W of the conductor pattern of the encoder structure 3 changes, the eddy current caused by magnetic flux generated when applying a signal current to the inductance element changes too. It is possible to detect a rotation angle $\theta$ of the rotor 2y by performing an arithmetic operation on the inductance which changes according to the eddy-current loss.

Examples of the material for forming the conductor pattern of the encoder structure 3 include, for example, aluminum, steel, copper, a wiring board, a conductive foil, and a conductive material such as a plastic material containing metal. The conductor pattern does not have to be made of a magnetic material.

It is preferred that the diameter D of the pattern portion of the encoder structure 3 and cycle number (i.e., number of cycles) n of the encoder structure 3 are respectively determined in accordance with conditions (such as configuration, diameter and the like) of the rotor 2 on which the encoder structure 3 is arranged.

Next, the configuration of the sensor body 4 according to a comparative example for the present embodiment will be described first before describing the configuration of the sensor body 4 according to the present embodiment.

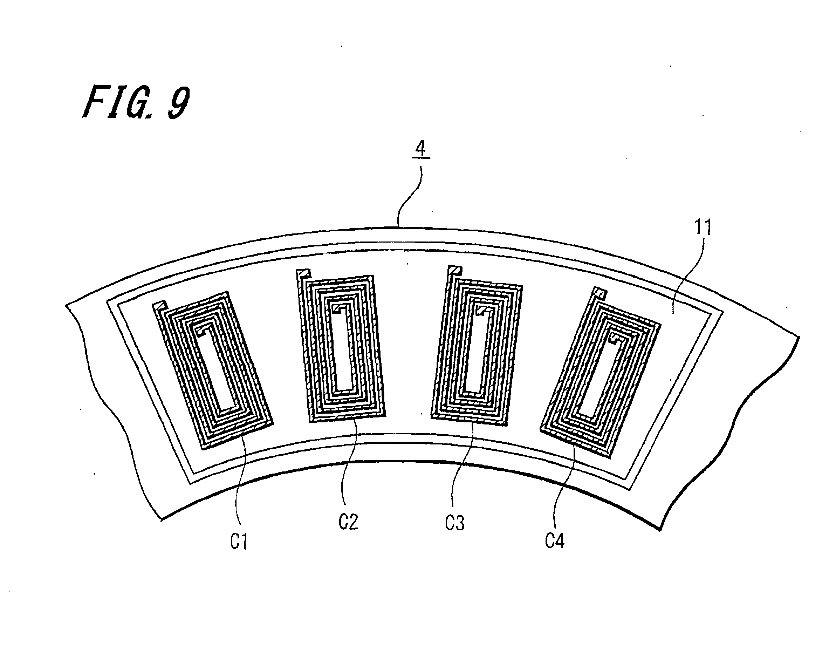

FIG. 9 is a view schematically showing the configuration of the sensor body 4 according to the comparative example (i.e., an enlarged plan view of primary portions).

As shown in FIG. 9, four pattern coils C1, C2, C3 and C4, each formed by a conductor having a square spiral shape, are formed on a substrate 11 such as a printed circuit board or the like.

The coils C1, C2, C3 and C4 each configure an air core coil.

The four pattern coils C1, C2, C3 and C4 of the sensor body 4 respectively configure a first coil C1, a second coil C2, a third coil C3 and a fourth coil C4.

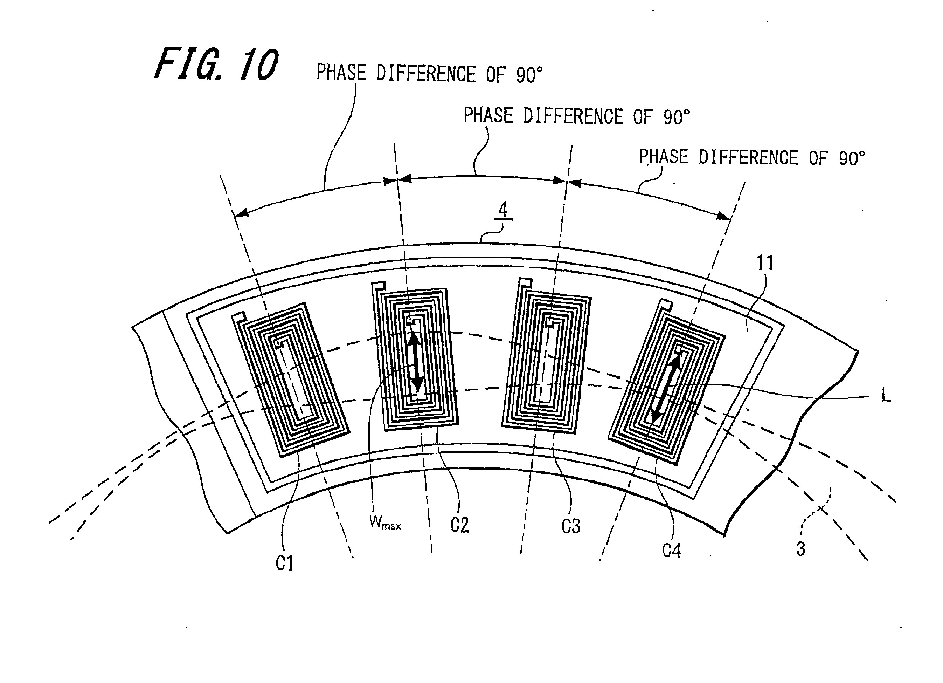

FIG. 10 shows a state where the coils C1, C2, C3 and C4 and the conductor pattern of the encoder structure 3 of the comparative example face each other.

The coils C1, C2, C3 and C4 are disposed apart from each other by a space of 1/4 phase (i.e., a phase difference of 90 degrees) of the periodic change of the width of the conductor pattern of the encoder structure 3. In other words, the first coil C1, the second coil C2, the third coil C3 and the fourth coil C4 are disposed in this order by a phase difference of 90 degrees.

Thus, both the second coil C2 and the fourth coil C4 and both the first coil C1 and the third coil C3 are disposed by a phase difference of 90 degrees.

Further, the first coil C1 and the third coil C3 form a phase angle offset of 180 degrees, and the second coil C2 and the fourth coil C4 form a phase angle offset of 180 degrees.

Therefore, it is possible to generate a signal such as a differential signal, and detect the absolute position of the rotor 2 using such signal. Further, it is also possible to detect the moving direction of the conductor pattern of the encoder structure 3, i.e., the rotation direction (clockwise direction, or counterclockwise direction) of the rotor 2.

Longitudinal size L of the air core of each of the coils C1, C2, C3 and C4 is set to be larger than the maximum width Wmax of the conductor pattern of the encoder structure 3. Due to such a size relation, when the magnetic flux is generated from the respective coils C1, C2, C3 and C4, strength of the eddy current generated in the encoder structure 3 can be improved, and therefore detection accuracy can be improved.

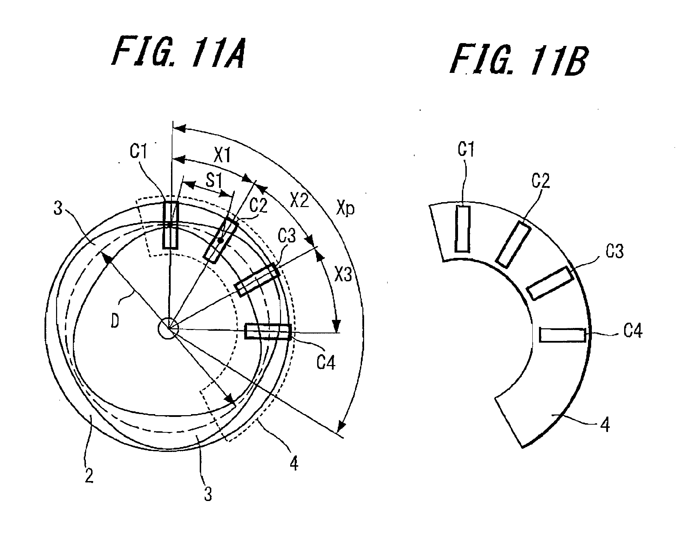

FIG. 11A shows the entire arrangement of the coils C1, C2, C3 and C4 and the conductor pattern of the comparative example. In FIG. 11A, the outer edge of the sensor body 4 is indicated by a broken line.

FIG. 11A shows a state where the first coil C1 faces the conductor pattern of the encoder structure 3 at a position where the width of the conductor pattern is the minimum, that is, a state where the first coil C1 has moved 1/4 cycle from the arrangement state shown in FIG. 10. Further, FIG. 11B shows the sensor body 4 extracted from FIG. 11A.

Hereinafter, the description will be given based on the following definition: in the conductor pattern of the encoder structure 3, the position where the width is the minimum is phase 0°, the position where the width is the maximum is phase 180°, and one phase is a range from phase 0° to phase 360°.

In FIG. 11A, an angle Xp of one phase of the encoder structure (the conductor pattern) 3 is 120 degrees, as is described in FIG. 2.

The four coils C1, C2, C3 and C4 are disposed on the sensor body 4 so as to be housed in a portion corresponding to one phase of the encoder structure 3.

Further, as shown in FIG. 11A, when the first coil C1 is located at a position corresponding to phase 0° of the encoder structure 3, the second coil C2 will be located at a position corresponding to phase 90° of the encoder structure 3, the third coil C3 will be located at a position corresponding to phase 180° of the encoder structure 3, and the fourth coil C4 will be located at a position corresponding to phase 270° of the encoder structure 3.

Generally, when the cycle number is n, the angle Xp of one phase of the pattern of the encoder structure 3 is: Xp = 2n/n.

Further, the angle between adjacent coils Xmn is: Xmn = Xp/4 = $2\pi/(4n)$ = $\pi/(2n)$.

Further, the distance between adjacent coils (the distance between centers of coils) Smn is: Smn = D·sin(Xmn/2) - D·sin ($\pi/(4n)$).

In the case shown in FIG. 11A, the cycle number n = 3, therefore Xp, Xmn and Smn are respectively: Xp = 2n/3; Xmn = $\pi/6$; and Smn=D·sin($\pi/12$).

Thus, angle X1 between the first coil C1 and the second coil C2, angle X2 between the second coil C2 and the sthird coil C3, and angle X3 between the third coil C3 and the fourth coil C4 are: X1 = X2 = X3 = Xmn = n/6. Further, distance S1 between the first coil C1 and the second coil C2 is: S1 = Smn = D·sin($\pi/12$).

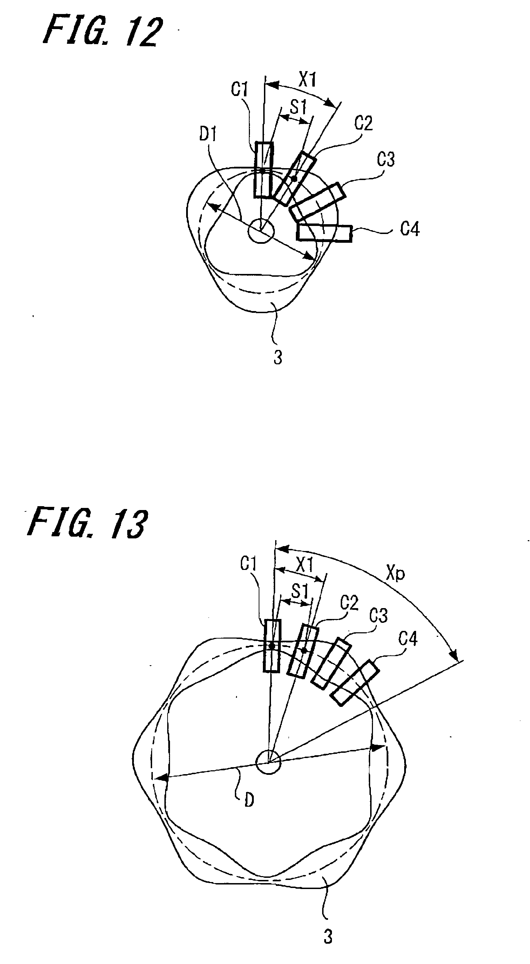

However, in the configuration of the aforesaid comparative example, as shown in FIG. 12, when reducing the diameter D of the pattern portion of the encoder structure 3 without changing the cycle number n, the distance between adjacent coils will become small.

The relation between the diameter D1 of the pattern portion of the encoder structure 3 of the case shown in FIG. 12 and the diameter D of the pattern portion of FIG. 11A is: D1 = D/2.

In such a case, the distance S1 between the first coil C1 and the second coil C2 is: S1 = D1•sin($\pi/12$) = (D/2)•sin($\pi/12$), which is 1/2 of the distance between coils in the case shown in FIG. 11A.

In such a case, similar to the case of FIG. 11, two adjacent coils C1 and C2, two adjacent coils C2 and C3, and two adjacent coils C3 and C4 are disposed apart from each other by a space of 1/4 of one phase (i.e., a phase difference of 90 degrees).

Incidentally, the diameter D1 of the reduced pattern portion can generally be indicated by the following equation:

$$D1 = k \times D \quad (\text{where } 0 < k \leq 1)$$

The distance between adjacent coils at this time can be indicated by the following equation:

$$S1mn = D1 \cdot \sin(\pi/4n) = k \times Smn$$

Thus, when reducing the diameter D of the pattern portion of the encoder structure 3 without changing the cycle number n, since the distance between adjacent coils is also reduced, error will be caused in detection result due to the interaction between adjacent coils as mentioned above, and therefore accuracy of the sensor will be degraded.

On the other hand, in the configuration of the aforesaid comparative example, when increasing the cycle number n without changing the diameter D of the pattern portion of the encoder structure 3, as shown in FIG. 13, the distance between adjacent coils will become small.

In the case of FIG. 13, the cycle number n2 becomes twice as many as the cycle number n =3 of FIG. 11A, i.e., the cycle number n2 will become: n2 = 6.

In such a case, the period of the pattern will be: Xp = 2n/6 = n/3, and the angle between the first coil C1 and the second coil C2 will be: X1 = $\pi/(2 \cdot n2)$ = n/12, both being 1/2 of the values of the case shown in FIG. 11A.

Thus, the distance S1 between the first coil C1 and the second coil will also be reduced: S1 = D · sin(X1/2) = D·sin($\pi/24$).

In such a case, similar to the case of FIGS. 11A and 11B, two adjacent coils C1 and C2, two adjacent coils C2 and C3, and two adjacent coils C3 and C4 are disposed apart from each other by a space of 1/4 of one phase (i.e., a phase difference of 90 degrees).

Incidentally, in the case of the increased cycle number n2, the distance S2 between adjacent coils is generally indicated by the following equation:

$$S2mn = D \cdot \sin(\pi / (4 \cdot n2))$$

When the cycle number n2 becomes large, the distance S2 between adjacent coils becomes small.

Thus, when increasing the cycle number n without changing the diameter D of the pattern portion of the encoder structure 3, since the distance between adjacent coils is also reduced, error will be caused in detection result due to the interaction between adjacent coils as mentioned above, and therefore accuracy of the sensor will be degraded.

Furthermore, in the case where the diameter D of the pattern portion is reduced and the cycle number n is increased, since the distance between adjacent coils is further reduced, and the problem of accuracy degradation of the sensor will become remarkable.

As described above, in the configuration of the comparative example, when reducing the diameter D and/or increasing the cycle number n, the distance between adjacent coils will be reduced and the connection between adjacent coils will become dense, and, as a result, accuracy of the sensor will be degraded.

For this reason, there has been a restriction in developing a sensor having reduced diameter of the pattern portion and/or increased cycle number.

An object of the present embodiment is to alleviate such restriction, and the feature of the present embodiment lies in the disposition of the four coils C1, C2, C3 and C4 of the sensor body 4.

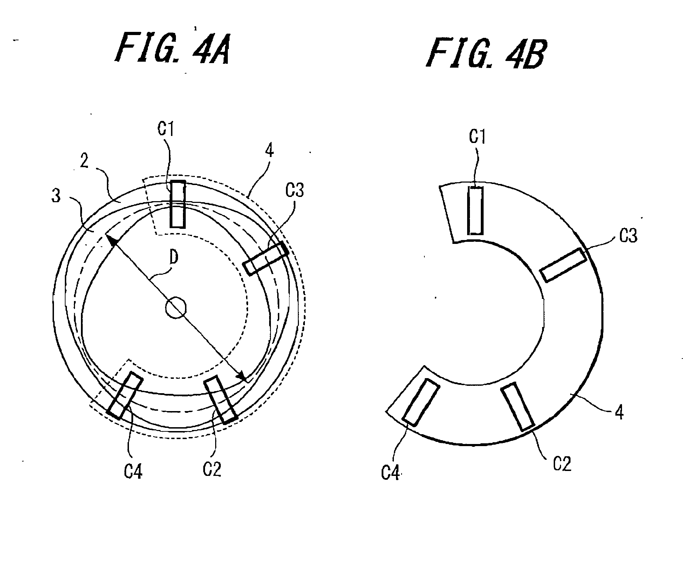

FIGS. 4A and 4B are views schematically showing the configuration of the primary portions (including the sensor body 4) of the present embodiment. FIG. 4A is a view showing the entire arrangement in a manner similar to FIG. 11A. In FIG. 4A, the outer edge of the sensor body 4 is indicated by a broken line. FIG. 4B is a plan view of the sensor body 4 of FIG. 4A.

FIG. 4A shows a state where the first coil C1 faces the conductor pattern of the encoder structure 3 at the position where the width of the conductor pattern is the minimum.

Further, although not shown, the diameter of the pattern portion of the conductor pattern of the encoder structure 3 is equal to that of FIG. 11A.

Particularly, two coils C1 and C2, two coils C2 and C3, and two coils C3 and C4, each two being disposed adjacent to each other with a phase difference of 90 degrees in FIGS. 11A and 11B, are separately disposed in the present embodiment as shown in FIGS. 4A and 4B.

In FIGS. 11A and 11B, the first coil C1, the second coil C2, the third coil C3, and the fourth coil C4 are disposed clockwise in this order.

In contrast, in the present embodiment, the first coil C1, the third coil C3, the second coil C2 and the fourth coil C4 are disposed clockwise in this order.

Compared to FIGS. 11A and 11B, the second coil C2 and the fourth coil C4 are each moved to a position of the same phase of the next phase, while the first coil C1 and the third coil C3 each stay in the original position.

Further, the first coil C1 and the third coil C3 are disposed apart from each other by a space of 1/2 of one phase (120 degrees) (i.e., a space of 60 degrees), the third coil C3 and the second coil C2 are disposed apart from each other by a space of 3/4 of one phase (i.e., a space of 90 degrees), the second coil C2 and the fourth coil C4 are disposed apart from each other by a space of 1/2 of one phase (i.e., a space of 60 degrees), and the fourth coil C4 and the first coil C1 are disposed apart from each other by a space of 5/4 of one phase (i.e., a space of 150 degrees).

In other words, two adjacent coils (i.e., the two adjacent coils C1 and C3, the two adjacent coils C3 and C2, the two adjacent coils C2 and C4, and the two adjacent coils C4 and C1) are disposed apart from each other by a space of 1/2 or more of one phase (i.e., a space of 60 degrees or more), which is twice or more as large as the space of the case shown in FIGS. 11A and 11B.

Similar to the comparative example shown in FIG. 9, the sensor body 4 and the four coils C1, C2, C3 and C4 can be configured by forming the four coils C1, C2, C3 and C4 on the substrate 11 such as a printed circuit board or the like with the pattern coils each formed by a conductor having a square spiral shape. A copper foil, for example, is used as the conductor of the coils.

Incidentally, the shape of the coil is not limited to the square spiral shape, but can be other shapes such as a rounded square spiral shape, an elliptical spiral shape or the like.

As for the configuration of the substrate 11 and the coils C1, C2, C3 and C4, either of the following configurations can be adopted: the configuration in which the substrate 11 and the coils C1, C2, C3 and C4 are housed inside the sensor body 4; the configuration in which the substrate 11 and the coils C1, C2, C3 and C4 are arranged on the surface of the sensor body 4 on the side of the rotor 2; and the configuration in which the substrate 11 and the coils C1, C2, C3 and C4 are arranged on the surface of the sensor body 4 on the side opposite to the rotor 2. Particularly, efficiency will be good if the configuration in which the substrate 11 and the coils C1, C2, C3 and C4 are arranged on the surface of the sensor body 4 on the side of the rotor 2 is adopted.

It is preferred that various circuits (such as a central arithmetic processing circuit, a peripheral circuit and the like), components, wirings and the like are arranged on the sensor body 4 in the margin portion of the drawings where the coils C1, C2, C3 and C4 are not disposed.

Thus, in the embodiment shown in FIGS. 4A and 4B, since it is possible to arrange additional circuits in the expanded space between the coils, function and performance of the sensor can be improved.

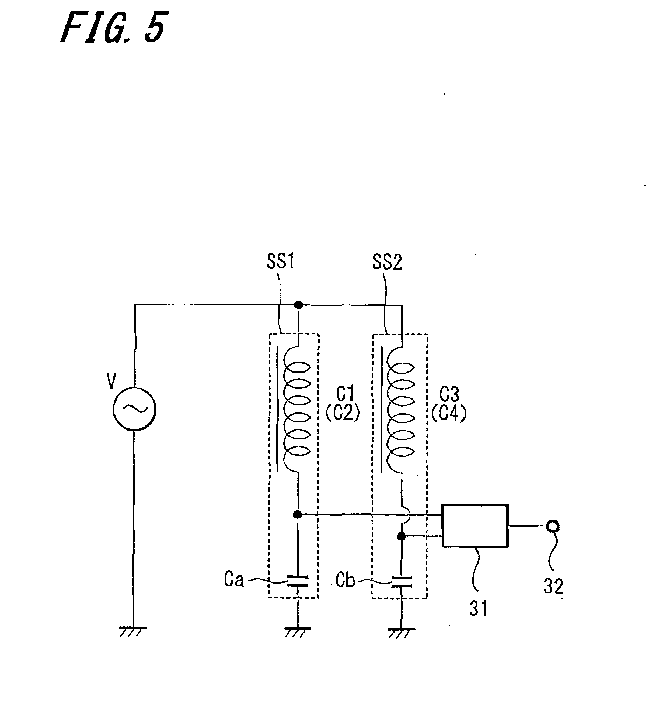

In the present embodiment, a first sensor system SS1 (see FIG. 5) having the first coil C1 and the second coil C2 and a second sensor system SS2 (see FIG. 5) having the third coil C3 and the fourth coil C4 are configured by the four coils C1, C2, C3 and C4 of the sensor body 4.

Further, for example, by connecting the two coils C1 and C2 of the first sensor system SS1 in parallel to each other and connecting the two coils C3 and C4 of the second sensor system SS2 in parallel to each other, a circuit for detecting signals from each of the sensor systems SS1 and SS2 is configured.

FIG. 5 is a circuit diagram showing an example of a circuit configuration of a sensor system configured to obtain a detection circuit.

In the circuit diagram shown in FIG. 5, the first sensor system SS1 is configured by a resonant circuit formed by connecting the first coil C1 (the same goes for the second coil C2) in series with a capacitor Ca. The second sensor system SS2 is configured by a resonant circuit formed by connecting the third coil C3 (the same goes for the fourth coil C4) in series with a capacitor Cb.

An AC voltage source V is connected in parallel with the sensor systems SS1 and SS2. Voltage is supplied to the resonant circuit of each of the sensor system SS1 and SS2 by the AC voltage source.

Further, a phase comparator 31 (which is a kind of logic circuit) is connected to the node of each of the sensor systems SS1 and SS2, and phase difference of the encoder structure 3 is detected by the phase comparator 31.

A sensor signal 32 can be obtained as the output of the phase comparator 31.

Incidentally, although not shown in the drawings, in addition to the coil and the capacitor, a resistor may be connected to configure each of the resonant circuits of the sensor systems.

Rotation angle detecting principle of the rotation angle detecting sensor according to the present embodiment will be briefly described below.

When the rotor 2 rotates with the rotating shaft 1 as the center, since the width of the conductor pattern of the encoder structure 3 facing the coils C1, C2, C3 and C4 changes, the eddy current caused in the conductor pattern when the magnetic flux is generated from the coils C1, C2, C3 and C4 changes too.

Due to the eddy current caused in the conductor pattern, the magnetic flux passing through the coils C1, C2, C3 and C4 attenuates.

Thus, the attenuation of the magnetic flux changes corresponding to the change of the eddy current caused in the conductor pattern, and thereby the inductance of the coils C1, C2, C3 and C4 changes too.

Since the amplitude, the phase, the frequency and the like of the output signal obtained from the sensor systems SS1 and SS2 configured by the coils C1, C2, C3 and C4 change due to the change of the inductance of the coils C1, C2, C3 and C4, the rotation angle of the rotor 2 can be detected by detecting the change of the amplitude, the phase, the frequency and the like of the output signal.

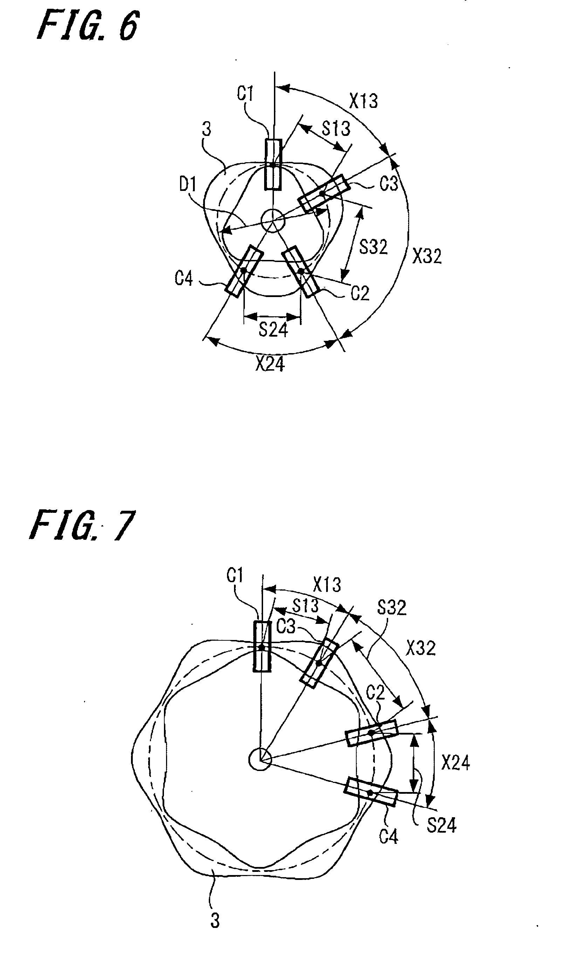

FIG. 6 shows the entire arrangement of the configuration of FIG. 4A in the case where the diameter D of the pattern portion of the encoder structure 3 is reduced without changing the cycle number n.

Similar to the case of FIG. 12, in the case shown in FIG. 6, the diameter D1 of the pattern portion of the encoder structure 3 is: D1 = D/2.

In the case shown in FIG. 6, the angles between adjacent coils are as follows.

The angle between the first coil C1 and the third coil C3 is: $X13 = 2 \cdot (\pi/6) = n/3$.

The angle between the third coil C3 and the second coil C2 is: $X32 = 3 \cdot (\pi/6) = n/2$.

The angle between the second coil C2 and the fourth coil C4 is: $X24 = 2 \cdot (\pi/6) = n/3$.

Further, the distances between adjacent coils are as follows.

The distance between the first coil C1 and the third coil C3 is: $S13 = D1 \cdot sinX13/2 = (D/2)sin(\pi/6)$.

The distance between the third coil C3 and the second coil C2 is: $S32 = D1 \cdot sinX32/2 = (D/2)sin(n/4)$.

The distance between the second coil C2 and the fourth coil C4 is: $S24 = D1 \cdot sinX24/2 = (D/2)sin(\pi/6)$.

Thus, compared to the case of FIG. 12 where the distance between two adjacent coils is $(D/2)sin(n/12)$, the distance between two adjacent coils can be increased.

Thus, since the distance between adjacent coils can be increased compared to the case of FIG. 12, the interaction between adjacent coils can be reduced, and therefore error caused in detection result can be restrained. In other words, accuracy of the sensor can be improved.

FIG. 7 shows the entire arrangement of the configuration of FIG. 4A in the case where the cycle number n is increased without changing the diameter D of the pattern portion of the encoder structure 3.

Similar to the case of FIG. 13, in the case shown in FIG. 7, the cycle number n2 of the pattern portion of the encoder structure 3 is increased to: n2 = 6.

In the case shown in FIG. 7, the angles between adjacent coils are as follows.

The angle between the first coil C1 and the third coil C3 is: X13 = 2·(π/12) = n/6.

The angle between the third coil C3 and the second coil C2 is: X32 = 3·(π/12) = n/4.

The angle between the second coil C2 and the fourth coil C4 is: X24 = 2·(n/12) = n/6.

Further, the distances between adjacent coils are as follows.

The distance between the first coil C1 and the third coil C3 is: S13 = D·sinX13/2 = D·sin(π/12).

The distance between the third coil C3 and the second coil C2 is: S32 = D•sinX32/2 = D·sin(π/8).

The distance between the second coil C2 and the fourth coil C4 is: S24 = D•sinX24/2 = D·sin(π/12).

Thus, compared to the case of FIG. 13 where the distance between two adjacent coils is D·sin(π/24), the distance between two adjacent coils can be increased.

Thus, since the distance between adjacent coils can be increased compared to the case of FIG. 13, the interaction between adjacent coils can be reduced, and therefore error caused in detection result can be restrained. In other words, accuracy of the sensor can be improved.

The rotation angle detecting sensor according to the present invention, such as the configuration of the rotation angle detecting sensor of the aforesaid embodiment, can be applied to various kinds of rotating body to detect the rotation angle.

For example, the rotation angle detecting sensor according to the present invention can be applied to a permanent magnet synchronous motor to detect the rotation angle of the rotor of the motor.

In such a case, an encoder structure configured by a conductor pattern whose width changes periodically is formed on a surface of the rotor of the motor, and a sensor body having inductance elements (such as coils or the like) arranged thereon is provided opposing the encoder structure.

It is preferred that the number of magnet pairs of the rotor of the motor is equal to the cycle number of the conductor pattern of the encoder structure. With such a configuration, the angle information necessary for controlling rotational operation of the motor can be obtained in a detailed manner, and as a result, rotation control of the motor can be finely performed.

Incidentally, although the sensor body 4 is a C-shaped member in FIGS. 4A and 4B, the sensor body may also be an O-shaped member formed surrounding the rotating shaft 2.

If the sensor body 4 is formed in C-shape, the sensor body 4 can be made smaller, and therefore the whole rotation angle detecting sensor can be miniaturized.

On the other hand, if the sensor body 4 is formed in O-shape, there will be more space for disposing various circuits, components, wirings and the like, and therefore there will be more flexibility in design.

According to the present embodiment, since two adjacent coils (i.e., the two adjacent coils C1 and C3, the two adjacent coils C3 and C2, the two adjacent coils C2 and C4, and the two adjacent coils C4 and C1) are disposed apart from each other by a space of 1/2 or more of one phase (i.e., a space of 60 degrees or more), the distance between two adjacent coils can be increased, and therefore the interaction between two adjacent coils can be reduced, so that error caused in the detection result can be restrained.

Thus, accuracy of the sensor can be improved.

Further, in the case where the diameter D of the pattern portion of the encoder structure 3 is reduced and/or where the cycle number n of the encoder structure 3 is increased, sufficient distance can be ensured between adjacent coils, and therefore high accuracy can be obtained.

Thus, it is possible to reduce the diameter of the pattern portion and therefore to reduce the size of the whole sensor.

According to the aforesaid embodiment, in each of the cases shown in FIGS. 4A and 4B, FIG. 6 and FIG. 7, the four coils C1, C2, C3 and C4 are disposed so as to be housed in a portion corresponding to two phases of the encoder structure 3.

In the present invention, the coils may also be disposed so as to housed in a portion corresponding to two three or more phases of the encoder structure 3, as long as the angle between adjacent coils is equal to or more than 1/2 of one phase.

For example, in the case where there are six phases in the encoder structure 3, as shown in FIG. 7, it is possible to dispose other coils in a range of third to sixth phases when viewed from the first coil C1 where no coils are disposed in the case of FIG. 7.

Thus, since the coils can be disposed in many different ways, there is more flexibility in defining the shape of the sensor, disposing the components, and the like.

The feature of the disposition of the four inductance elements (wherein the four inductance elements respectively have phases of: 0 degree, 90 degrees, 180 degrees and 270 degrees, and each two adjacent inductance elements have a phase difference of 90 degrees) lies in the following:

When the first inductance element is located at the position corresponding to phase 0° of the first phase of the encoder structure, the second inductance element will be located at the position corresponding to phase 90° of any one of the second to n-th phases of the encoder structure, the third inductance element will be located at the position corresponding to phase 180° of any one of the first to n-th phases of the encoder structure, and the fourth inductance element will be located at the position corresponding to phase 270° of any one of the first to (n-1)-th phases of the encoder structure. However, at this time, the third inductance element is located in a phase other than the phase where the second inductance element is located, and the fourth inductance element is located in a phase other than the phase where the third inductance element is located. If the second inductance element is located in the first phase, the condition of the present invention will not be met. Similarly, if the fourth inductance element is located in the n-th phase, the fourth inductance element and the first inductance element will be closely adjacent to each other, and therefore the condition of the present invention will not be met.

Further, as an embodiment of the disposition of the four inductance elements, there is a configuration in which the four inductance elements are disposed so that, when the first inductance element in phase order is located at the position corresponding to phase 0° of the first phase of the encoder structure, the third inductance element in phase order will be located in the first phase of the encoder structure, and both the second and fourth inductance elements in phase order will be located in any one of the second to (n-1)-th phases of the encoder structure. Incidentally, as an example of the aforesaid embodiment, FIG. 4A and 4B shows a disposition in which both the second and fourth inductance elements is located in the second phase of the encoder structure.

Next, another disposition meeting the condition of the present invention will be described below.

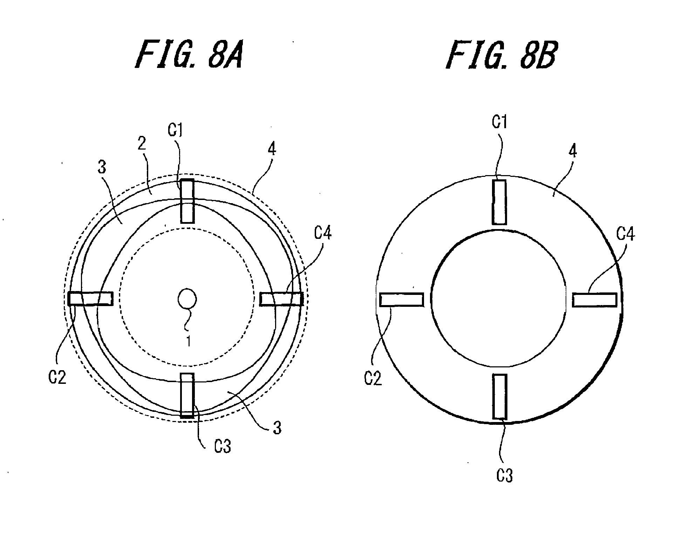

FIGS. 8A is a view schematically showing the configuration of a rotation angle detecting sensor according to another embodiment of the present invention (a plan view showing the entire arrangement of the rotation angle detecting sensor). Further, FIG. 8B is a plan view showing the sensor body 4 of FIG. 8A.

As shown in FIGS. 8A and 8B, in the present embodiment, the four coils C1, C2, C3 and C4 are arranged apart from each other by equal spaces in the order of: the first coil C1, the fourth coil C4, the third coil C3, and the second coil C2.

Further, the sensor body 4 is an O-shaped member formed surrounding the rotating shaft 2 in accordance with the disposition of the four coils C1, C2, C3 and C4.

In the present embodiment, each of the spaces between two adjacent coils are 3/4 of one phase (120 degrees) of the encoder structure 3 (i.e., each of the spaces between two adjacent coils is 90 degrees).

In other words, the present embodiment meets the condition of the present invention which is: each of the spaces between two adjacent coils is equal to or more than 1/2 of one phase.

Since other configurations of the present embodiment is identical to those of the former embodiment shown in FIGS. 4A and 4B, description thereof will be omitted.

According to the present embodiment, each of the spaces between two adjacent coils is 3/4 of one phase (120 degrees) of the encoder structure 3 (i.e., each of the spaces between two adjacent coils is 90 degrees), which means the condition of the present invention "each of the spaces between two adjacent coils is equal to or more than 1/2 of one phase" has been met. Thus, the distance between two adjacent coils can be increased, the interaction between two adjacent coils can be reduced, and therefore error caused in the detection result can be restrained.

Thus, accuracy of the sensor can be improved.

Further, in the case where the diameter of the pattern portion of the encoder structure 3 is reduced and/or where the cycle number n of the encoder structure 3 is increased, sufficient distance can be ensured between adjacent coils, and therefore high accuracy can be obtained.

Thus, it is possible to reduce the diameter of the pattern portion and therefore to reduce the size of the whole sensor.

In the case shown in FIGS. 8A and 8B, the sensor body 4 is an O-shaped member formed in a circle, however the configuration may also be such that the sensor body has a C-shape whose open portion is located between two adjacent coils (for example, between the first coil C1 and the fourth coil C4).

Another possible configuration is the one in which the sensor body 4 is divided into a plurality of portions each having a part of the four coils disposed thereon. However, in such a case, if the divided portions of the sensor body are failed to be attached with high accuracy, the detection accuracy of the sensor will be affected.

Thus, it is preferred that the sensor body 4 is integrally formed, such as formed in an O-shape or a C-shape.

When cycle number of the encoder structure 3 is: n = 3, there are two methods of disposing the four coils C1, C2, C3 and C4 respectively shown in FIGS. 4A and 4B and FIGS. 8A and 8B.

Although not shown in the drawings, when cycle number of the encoder structure 3 is: n = 4, there are five methods of disposing the four coils C1, C2, C3 and C4.

The larger the cycle number n of the encoder structure 3 is, the larger the number of possible dispositions is.

Note that, when the cycle number is: n = 2, since the four coils C1, C2, C3 and C4 can not be disposed in a manner that meets the condition of the present invention, the cycle number n shall be set to three or more.

Note that, although the inductance elements of the sensor are configured by the coils C1, C2, C3 and C4 in the aforesaid embodiments, the sensor of the present invention may also be configured by other inductance elements than coils.

Further, although there are four inductance element configured by the coils disposed on the sensor in the

**EP 2 221 588 B1**

aforesaid embodiments, the number of the inductance element disposed on the sensor of the present invention is not limited to four, but may be any number as long as the number is equal to or larger than two.

**Claims**

1. A rotation angle detecting sensor comprising:

   a rotating body (2);
   an encoder structure (3) configured by a conductor pattern attached to the rotating body (2) so as to be able to rotate with the rotating body, the encoder structure having n cycles of phases each ranging from phase 0° to phase 360°, with n representing a positive integer and each phase being formed by periodically changing the width of the conductor pattern; and
   a sensor body (4) having a plurality of inductance elements and disposed opposing the encoder structure (3) with a space,
   wherein the cycle number n of the phase of the encoder structure (3) is a positive integer equal to or greater than three,
   wherein the plurality of inductance elements have a phase difference of 90 degrees therebetween, and
   wherein two adjacent inductance elements are disposed apart from each other by a space of at least half a phase of the encoder structure (3).

2. The rotation angle detecting sensor according to claim 1, wherein the plurality of inductance elements are a first inductance element (C1), a second inductance element (C2), a third inductance element (C3) and a fourth inductance element (C4), the four inductance elements being disposed so that: when the first inductance element is located at a position corresponding to phase 0° of the first phase of the encoder structure (3), the second inductance element will be located at a position corresponding to phase 90° of any one of the second to n-th phases of the encoder structure, the third inductance element will be located at a position corresponding to phase 180° of any one of the first to n-th phases of the encoder structure other than the phase where the second inductance element is located, and the fourth inductance element will be located at a position corresponding to phase 270° of any one of the first to (n-1)-th phases of the encoder structure other than the phase where the third inductance element is located.

3. The rotation angle detecting sensor according to claim 1 or 2, wherein the plurality of inductance elements are a first inductance element (C1), a second inductance element (C2), a third inductance element (C3) and a fourth inductance element (C4), the four inductance elements being disposed so that: among the four inductance elements, when the first inductance element in phase order is located at a position corresponding to phase 0° of the first phase of the encoder structure (3), the third inductance element in phase order will be located in the first phase of the encoder structure, and both the second and fourth inductance elements in phase order will be located in any one of the second to (n-1)-th phases of the encoder structure.

**Patentansprüche**

1. Drehwinkeldetektionssensor, der Folgendes umfasst:

   einen rotierenden Körper (2);
   eine Codiererstruktur (3), die durch ein Leitermuster konfiguriert ist, das in der Weise an dem rotierenden Körper (2) angebracht ist, dass es mit dem rotierenden Körper rotieren kann, wobei die Codiererstruktur n Zyklen von Phasen besitzt, die jeweils im Bereich von der Phase 0° bis zu der Phase 360° liegen, wobei n eine positive ganze Zahl repräsentiert und wobei jede Phase durch periodisches Ändern der Breite des Leitermusters gebildet ist; und
   einen Sensorkörper (4), der mehrere Induktivitätselemente besitzt und der Codiererstruktur (3) mit einem Zwischenraum gegenüberliegend angeordnet ist,
   wobei die Zyklusanzahl n der Phase der Codiererstruktur (3) eine positive ganze Zahl gleich oder größer als drei ist,
   wobei zwischen den mehreren Induktivitätselementen eine Phasendifferenz von 90 Grad besteht, und
   wobei zwei angrenzende Induktivitätselemente durch einen Zwischenraum wenigsten von der Hälfte einer Phase der Codiererstruktur (3) voneinander beabstandet angeordnet sind.

**2.** Drehwinkeldetektionssensor nach Anspruch 1, wobei die mehreren Induktivitätselemente ein erstes Induktivitätselement (C1), ein zweites Induktivitätselement (C2), ein drittes Induktivitätselement (C3) und ein viertes Induktivitätselement (C4) sind, wobei die vier Induktivitätselemente in der Weise angeordnet sind, dass: wenn das erste Induktivitätselement an einer Position gelegen ist, die der Phase 0° der ersten Phase der Codiererstruktur (3) entspricht, das zweite Induktivitätselement an einer Position gelegen ist, die der Phase 90° irgendeiner der zweiten bis n-ten Phase der Codiererstruktur entspricht, das dritte Induktivitätselement an einer Position gelegen ist, die der Phase 180° irgendeiner der ersten bis n-ten Phase der Codiererstruktur, die verschieden von der Phase ist, an der das zweite Element gelegen ist, entspricht und das vierte Induktivitätselement an einer Position gelegen ist, die der Phase 270° irgendeiner der ersten bis (n-1)-ten Phase der Codiererstruktur, die verschieden von der Phase ist, an der das dritte Induktivitätselement gelegen ist, entspricht.

**3.** Drehwinkeldetektionssensor nach Anspruch 1 oder 2, wobei die mehreren Induktivitätselemente ein erstes Induktivitätselement (C1), ein zweites Induktivitätselement (C2), ein drittes Induktivitätselement (C3) und ein viertes Induktivitätselement (C4) sind, wobei die vier Induktivitätselemente in der Weise angeordnet sind, dass: wenn unter den vier Induktivitätselementen das erste Induktivitätselement in der Phasenreihenfolge an einer Position gelegen ist, die der Phase 0° der ersten Phase der Codiererstruktur (3) entspricht, das dritte Induktivitätselement in der Phasenreihenfolge in der ersten Phase der Codiererstruktur gelegen ist und sowohl das zweite als auch das vierte Induktivitätselement in der Phasenreihenfolge in irgendeiner der zweiten bis (n-1)-ten Phase der Codiererstruktur gelegen ist.

**Revendications**

**1.** Capteur d'angle de rotation, comprenant :

un corps rotatif (2) ;
une structure de codage (3) configurée par un réseau conducteur fixé au corps rotatif (2) de manière à pourvoir tourner avec le corps rotatif, la structure de codage comportant n cycles de phases chacun compris entre une phase 0° et une phase 360°, n représentant un entier positif et chaque phase étant formée par variation périodique de la largeur du réseau conducteur ; et
un corps capteur (4) comportant une pluralité d'éléments d'inductance et placé face à la structure de codage (3) et séparé de celle-ci par un espace,
dans lequel le nombre n de cycles de la phase de la structure de codage (3) est un entier positif supérieur ou égal à trois,
dans lequel la pluralité d'éléments d'inductance présentent entre eux un déphasage de 90 degrés, et
dans lequel deux éléments d'inductance adjacents sont séparés d'un espace d'au moins une demi-phase de la structure de codage (3).

**2.** Capteur d'angle de rotation selon la revendication 1, dans lequel la pluralité d'éléments d'inductance comprend un premier élément d'inductance (C1), un deuxième élément d'inductance (C2), un troisième élément d'inductance (C3) et un quatrième élément d'inductance (C4), les quatre éléments d'inductance étant placés de sorte que : lorsque le premier élément d'inductance occupera une position correspondant à la phase 0° de la première phase de la structure de codage (3), le deuxième élément d'inductance occupera une position correspondant à la phase 90° de l'une quelconque des deuxième à n-ième phases de la structure de codage, le troisième élément d'inductance occupera une position correspondant à la phase 180° de l'une quelconque des première à n-ième phases de la structure de codage autre que la phase occupée par le deuxième élément d'inductance, et le quatrième élément d'inductance occupera une position correspondant à la phase 270° de l'une quelconque des première à (n-1)-ième phases de la structure de codage autre que la phase occupée par le troisième élément d'inductance.

**3.** Capteur d'angle de rotation selon la revendication 1 ou 2, dans lequel la pluralité d'éléments d'inductance comprend un premier élément d'inductance (C1), un deuxième élément d'inductance (C2), un troisième élément d'inductance (C3) et un quatrième élément d'inductance (C4), les quatre éléments d'inductance étant placés de sorte que : parmi les quatre éléments d'inductance, lorsque le premier élément d'inductance par ordre de phase occupera une position correspondant à la phase 0° de la première phase de la structure de codage (3), le troisième élément d'inductance par ordre de phase occupera la première phase de la structure de codage, et les deuxième et quatrième éléments d'inductance par ordre de phase occuperont tous deux l'une quelconque des deuxième à (n-1)-ième phases de la structure de codage

# FIG. 1A

# FIG. 1B

*FIG. 2*

ONE PHASE

*FIG. 3*

# FIG. 4A

# FIG. 4B

# FIG. 5

FIG. 6

FIG. 7

# FIG. 8A

# FIG. 8B

*FIG. 9*

FIG. 10

PHASE DIFFERENCE OF 90°

PHASE DIFFERENCE OF 90°

PHASE DIFFERENCE OF 90°

EP 2 221 588 B1

# FIG. 11A

# FIG. 11B

## FIG. 12

## FIG. 13

**EP 2 221 588 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202006008962 U1